# EUROPEAN PATENT SPECIFICATION

(11) **EP 0 893 337 B1**
(45) Date of publication and mention of the grant of the patent: **22.09.2004**
(21) Application number: 98113344.0
(22) Date of filing: 17.07.1998
(51) Int. Cl.: B62L 3/02, B62K 23/06

(54) **Hydraulic master cylinder, reservoir and lever assembly for motorcycle**
Hydraulischer Hauptzylinder, Behälter und Bedienungshebelaufbau für Motorrad
Ensemble de maître-cylindre, réservoir et levier de commande hydraulique pour motocyclette

(30) Priority: 23.07.1997 IT MI970563 U
(43) Date of publication of application: 27.01.1999
(73) Proprietor: M.V. AGUSTA S.p.A, 21100 Varese (IT)
(72) Inventor: Tamburini, Massimo, 47895 Domagnano (SM)
(74) Representative: Giambrocono, Alfonso, Dr. Ing.

(56) References cited:
- EP-A- 0 792 795

## Description

It is the object of this discovery an assembly unit made of a pump, a tank for front brake system fluid and a brake or clutch driving lever of a motorcycle according to preamble of principal claim.

In a motorcycle or in a vehicle with two or three wheels, an assembly unit of above mentioned type (that will also be defined in the course of this description pump-tank-lever assembly unit) is usually constructed with pump and clutch or brake lever placed on the same plane on which handlebar also lies or at least its end part provided with a knob eg. EP-A-0 792 795. In this known solution, pump is placed in front of handlebar. This location (coplanarity of pump, lever and handlebar and pump position in reference to this last one) causes various problems connected with overall dimensions that above mentioned assembly unit shows. In particular, above mentioned positioning takes to a compulsory advancement of instrument assembly of vehicle placed in front of handlebar in order to allow optimum "drivability" of a motorcycle and, in particular, to obtain an acceptable steering angle especially for homologation purposes of vehicle. In addition to above mentioned advancement, instrument assembly (or dashboard) must also be placed in a lifted position with reference to handlebar plane, as a consequence,owing to this advancement and lift, front vehicle fairing may not show an adequate aerodynamic profile; as a result, difficulties may arise in reaching optimum performances, in limited consumptions and for a correct formulation from a stylistic point of view.

Configuration of pump-tank-lever assembly unit and relative location of these parts has an influence also on oil tank position with reference to dashboard; namely both in the case that tank is separate from pump and attached with appropriate support brackets, and in the case that it is directly connected with pump, there are important overall dimensions problems and especially of visibility of instruments and of the road.

In addition, pump-tank-lever known assembly units are often of difficult attachment to handlebar and usually show a bracket with two locking screws located in an unconfortable position to be reached when either assembling or disassembling this unit on handlebar.

Purpose of present discovery is that to offer a pump-tank-lever assembly unit of an improved type with reference to similar known assembly units.

In particular, purpose of present discovery is that to offer an assembly of mentioned type in which its various parts are located in mutual relation in order that small overall dimensions are obtained and not to prevent or restrict reading of instrument panel and neither to compel to choices of types of fairings or particular front domes and which may have a not optimum aerodynamic profile.

Purpose of this discovery is that to provide a pump-tank-lever assembly unit of an improved type with reference to known similar assembly units.

These purposes are achieved by an assembly unit according to the enclosed claims.

In order to have a better understanding of present discovery it is enclosed for only indicative reasons, but not restrictive ones, following drawing, in which:
figure 1 shows a top view of a pump-tank-lever assembly unit designed according to present discovery;
figure 2 shows a cross section view along line 2-2 in figure 1;
figure 3 shows a particular view of lever of assembly unit of figure 1; and
figure 4 shows an enlarged view of a detail indicated with K in figure 3.

With reference to mentioned figures, a pump-tank-lever assembly unit according to this discovery is generally indicated with 1 and it includes a pump 2 showing a cylindrical body 3, preferably in light alloy within which a small piston is placed (moving up and down), not shown, provided with appropriate and known sealing parts. Pump is connected to a tank 5 containing fluid of braking system and it is driven (in order to determine in known way operation of usual braking units of motor vehicle) by a lever 6 pivoted in 8 to a body 7 of assembly unit 1 and to which pump 2 is attached.

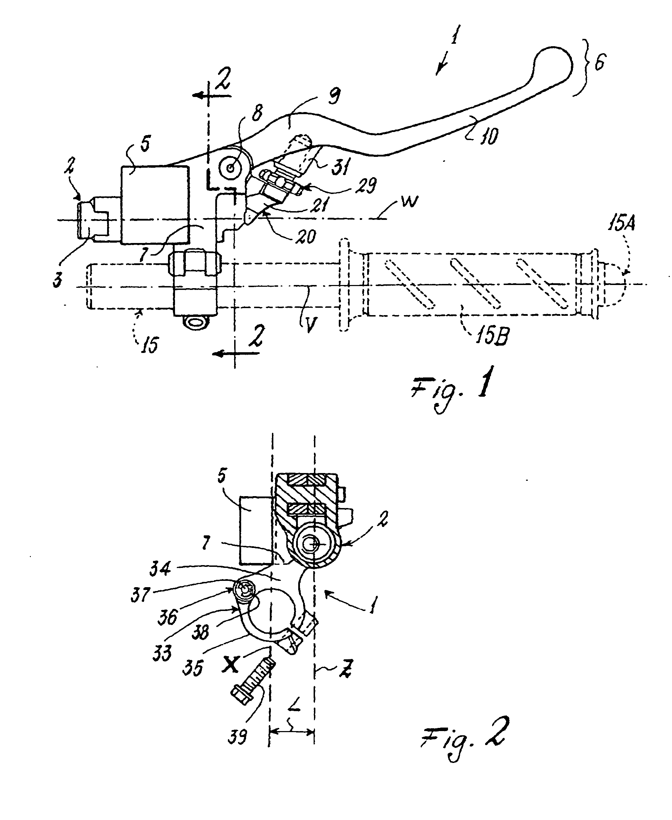

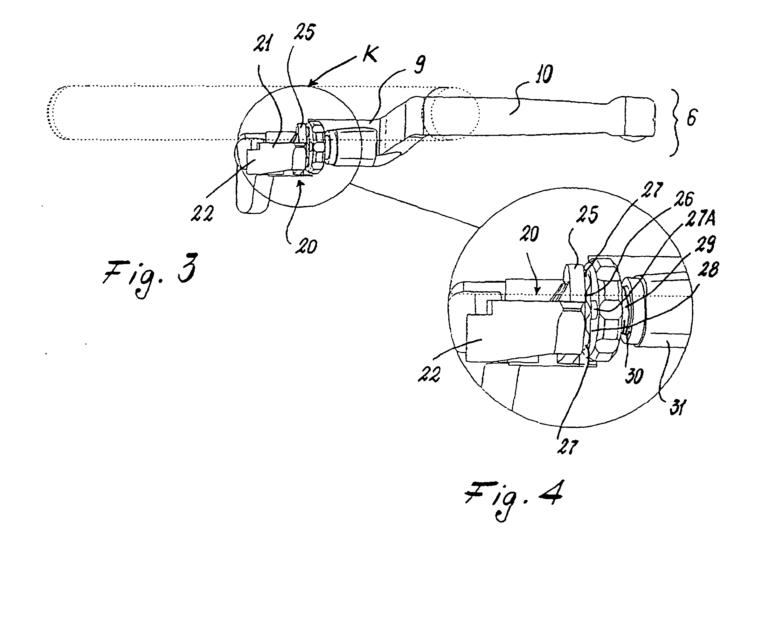

Lever 6 shows a first part 9 substancially coplanar with body 3 of pump 2 and pivoted to body 7 of assembly unit 1,and a second part 10 (which user usually operates in order to brake vehicle) located in different plane with reference to first part 9 and with reference to body 3 of pump. This second part 10 is located coplanar with a handlebar 15 of motorcycle or at least with an end part 15A of this handlebar on which a usual knob is placed 15B. In this way, according to innovative characteristic of discovery, body 3 of pump 1 is located (with its longitudinal axis W) on a plane Z which is different with reference with that X containing second part 10 of lever 6 (that it is nevertheless related to lever portion with which user cooperates and that can therefore be to all respects identified with same lever) and handlebar 15 or at least part 15A of this last one; this axis W is preferably and advantageously parallel to that longitudinal V of handlebar 15 (or of its end part 15A), but, as said, it does not lie any longer (as in known solutions) on same plane X of this last one. Pump is displaced towards bottom (or towards plane on which motorcycle is moving) with reference to plane X and and this displacement has a value equal to "L" (see figure 2) well quantifiable. As a consequence, by this lowering it is also obtained a moving back of pump body 3, and thus an assembly unit 1 which has smaller overall dimensions with consequent possibility to obtain wide steering angles, in particular those required for homologation in various countries of the world.

This new position of pump body 3 also allows to provide in front part of motorcycle necessary space for providing on pump body 3 a tank assembled directly on pump, with an appropriete shape capable to limit overall dimensions of same assembly unit 1.

Finally, greater compactness of assembly unit 1 (with reference to similar already known pump-tank-lever assembly units) allows to obtain fairings of motorcycle and in particular domes in a correct aerodynamical shape.

Lever 6 cooperates with a part 20 in adjustment of piston stroke placed in pump 3 body or capable to control operation of this pump on braking circuit fluid. This part 20 includes a swing type lever 21 provided at one of its end parts of a part 22 capable to cooperate with above said piston and at other end part of a discoidal unit 25 provided, on one of its surfaces 26, of opposite protuberances 27 capable to cooperate with cavities 27A present on a flat end surface 28 of a threaded body 29 movable within a housing 30 provided in a portion 31 of lever 6. By inserting or by taking out this body 29 from its relevant housing 30, a change in lever 21 operation is obtained on piston of pump body 3 and as a result in the braking action of this pump.

Pump-tank-lever assembly unit 1 is associated with handlebar 15 by means of a unit or bracelet 33 which has a first semicollar 34 solidly connected with pump body 3 and a second semicollar 35 pivoted to first one in 36. On hub 37 operating as a pivot an elastic anti-takingout safety ring 38 is placed. These semirings are mutually lockable by means of a screw 39 with a position axis incident on plane X and placed in sides of handlebar. This makes easier locking and opening of unit 33 without that operator be troubled by pump 2 presence and by other parts of assembly 1 applied to a front assembly unit with a lever operating on vehicle brakes from handlebar 15.

An embodiment of discovery has been described. Other ones are still nontheless possible (for example that related to assembly unit including clutch lever), also these last ones are to be considered included in scope of present document.

## Claims

1. Assembly unit (1) of pump, tank of front braking system fluid and driving lever of brake or of clutch of a motorcycle, including in addition to these units or pump (2), tank(5), and lever (6), a part (33) of attachment of this assembly to handlebar (15) of vehicle, this handlebar having an end part (15A) provided with a handling knob (15B), **characterized in that** lever (6) and braking system fluid pump (2) are located on different planes (X, Z), lever (6), when assembled, positioned on same plane of handlebar (15) or at least of end part (15A) of this last one where handling knob is placed.

2. Pump-tank-lever assembly unit as illustrated in claim 1, **characterized in that** different planes (X, Z) on which they lie,respectively, lever (6) and handlebar and pump (2) are parallel and mutually separated, plane (Z) on which pump (2) is located is placed under plane (X) on which lever (6) and handlebar are located.

3. Pump-tank-lever assembly unit as illustrated in claim 1, **characterized in that** a body (7) is included to which a body of pump (3) is attached, and to this body lever (6) is hinged, this last one showing two portions (9,10), located in different planes, second portion (10) being coplanar with handlebar (15) and being capable to be engaged by user in order to act on usual braking units of vehicle or on clutch of this last one.

4. Pump-tank-lever assembly unit as illustrated in claim 3, **characterized in that** lever includes a portion (31) to which a control unit is associated (29) capable to act as an end limit for movement of a part (20) which drives pump (2) of braking system fluid.

5. Pump-tank-lever assembly as illustrated in claim 4, **characterized in that** adjustable unit (29) is threaded and cooperates with a housing (30) provided in portion (31) of lever (6), said unit including an end surface (28) provided with at least a housing (27A) capable to cooperate with protuberant parts (27) associated with a discoidal unit (25) provided at one end part of part (20) which drives pump (2).

6. Pump-tank-lever assembly unit as illustrated in claim 1, **characterized in that** a bracelet part (33) is included for attachment to handlebar (15).

7. Pump-tank-lever assembly unit as illustrated in claim 6, **characterized in that** bracelet unit (33) includes a first semicollar (34) attached to pump body (3) and a second semicollar (35) hinged to first one (in 36), a locking screw being provided for these semicollars (34,35) having a positioning plane incident in plane (X) containing handlebar and located in sides of this last one.

## Patentansprüche

1. Baueinheit (1) einer Pumpe, eines Tanks einer Vorderbremssystemflüssigkeit und eines Betätigungshebels einer Bremse oder Kupplung eines Motorrads, die zusätzlich zu diesen Einheiten oder Pumpe (2), Tank (5) und Hebel (6) ein Befestigungsteil (33) für diese Baueinheit an einer Lenkstange (15) eines Fahrzeugs umfasst, wobei diese Lenkstange ein Endteil (15A) hat, das mit einem Handhabungsknopf (15B) versehen ist, **dadurch gekennzeichnet, dass** der Hebel (6) und die Bremssystemflüssigkeitspumpe (2) in verschiedenen Ebenen (X, Z) angeordnet sind, wobei der Hebel (6), wenn zusammengesetzt, auf der gleichen Ebene der Lenkstange (15) oder wenigstens des Endteils (15A) der Letzteren angeordnet ist, wo der Handhabungsknopf platziert ist.

2. Pumpe-Tank-Hebel-Baueinheit wie in Anspruch 1 dargestellt, **dadurch gekennzeichnet, dass** die verschiedenen Ebenen (X, Z), auf denen sie, bzw. Hebel (6) und Lenkstange und Pumpe (2), liegen, parallel und auf Abstand zueinander sind, wobei die Ebene (Z), auf der die Pumpe (2) angeordnet ist, unter der Ebene (X), auf der der Hebel (6) und die Lenkstange angeordnet sind, liegt.

3. Pumpe-Tank-Hebel-Baueinheit wie in Anspruch 1 dargestellt, **dadurch gekennzeichnet, dass** ein Körper (7) enthalten ist, an dem ein Pumpenkörper (3) angebracht ist und an dem der Hebel (6) angelenkt ist, wobei der Letztere zwei Bereiche (9, 10) zeigt, die in verschiedenen Ebenen liegen, wobei der zweite Bereich (10) koplanar mit der Lenkstange (15) ist und dazu geeignet ist, von einem Benutzer gegriffen zu werden, um die üblichen Bremseinheiten des Fahrzeugs oder dessen Kupplung zu betätigen.

4. Pumpe-Tank-Hebel-Baueinheit wie in Anspruch 3 dargestellt, **dadurch gekennzeichnet, dass** der Hebel einen Bereich (31) umfasst, dem eine Steuereinheit (29) zugeordnet ist, die dazu in der Lage ist, als eine Bewegungsendgrenze für ein Teil (20) zu wirken, das die Pumpe (2) der Bremssystemflüssigkeit antreibt.

5. Pumpe-Tank-Hebel-Baueinheit wie in Anspruch 4 dargestellt, **dadurch gekennzeichnet, dass** die einstellbare Einheit (29) mit einem Gewinde versehen ist und mit einem Gehäuse (30) zusammenwirkt, das in dem Bereich (31) des Hebels (6) vorgesehen ist, wobei die Einheit eine Endfläche (28) aufweist, die mit wenigstens einer Aufnahme (27A) versehen ist, die dazu in der Lage ist, mit mit vorstehenden Teilen (27) zusammenzuwirken, die einer Scheibeneinheit (25) zugeordnet sind, welche an einem Endteil des Teils (20) vorgesehen ist, das die Pumpe (2) antreibt.

6. Pumpe-Tank-Hebel-Baueinheit wie in Anspruch 1 dargestellt, **dadurch gekennzeichnet, dass** ein Schellenteil (33) zur Anbringung an der Lenkstange (15) umfasst ist.

7. Pumpe-Tank-Hebel-Baueinheit wie in Anspruch 6 dargestellt, **dadurch gekennzeichnet, dass** die Schelleneinheit (33) einen ersten Halbring (34), der an dem Pumpenkörper (3) befestigt ist, und einen zweiten Halbring (35) aufweist, der an dem ersten angelenkt ist (bei 36), wobei eine Verschlussschraube für diese Halbringe (34, 35) vorgesehen ist, die eine Positionierungsebene hat, die auf die Ebene (X) trifft, die die Lenkstange enthält, und die in Seiten der Letzteren angeordnet ist.

## Revendications

1. Ensemble (1) composé d'une pompe, d'un réservoir de fluide de circuit de freinage avant et d'une poignée d'actionnement de frein ou d'un embrayage d'une motocyclette, comprenant, en plus de ces dispositifs ou pompe (2) réservoir (5) et poignée (6), une pièce de fixation (33) de cet ensemble au guidon (15) du véhicule, ce guidon ayant une partie d'extrémité (15A) pourvue d'un bouton de manipulation (15B), **caractérisé en ce que** la poignée (6) et la pompe (2) à fluide de circuit de freinage sont situés dans des plans différents (X, Z), la poignée (6), lorsqu'elle est monté, est placée dans le même plan que le guidon (15) ou au moins d'une partie d'extrémité (15A) de ce dernier où est placé le bouton de manipulation.

2. Ensemble de pompe-réservoir-poignée selon la revendication 1, **caractérisé en ce que** les plans différents (X, Z) dans lesquels sont respectivement situés la poignée (6) et le guidon et la pompe (2) sont parallèles et mutuellement séparés, le plan (Z) dans lequel se trouve la pompe (2) est situé sous le plan (X) dans lequel se trouvent la poignée (6) et le guidon.

3. Ensemble de pompe-réservoir-poignée selon la revendication 1, **caractérisé en ce qu'**il est prévu un corps (7) auquel est fixé un carter de pompe (3), et sur ce corps est articulée la poignée (6) de corps, cette dernière présentant deux parties (9, 10) situées dans des plans différents, la deuxième partie (10) étant dans le même plan que le guidon (15) et pouvant être sollicitée par l'utilisateur afin d'agir sur des dispositifs de freinage habituels du véhicule ou sur l'embrayage de ce dernier.

4. Ensemble de pompe-réservoir-poignée selon la revendication 3, **caractérisé en ce que** la poignée comporte une partie (31) à laquelle est associé un dispositif de commande (29) apte à servir de butée de fin de course pour le mouvement d'une pièce (20) qui actionne la pompe (2) du fluide du circuit de freinage.

5. Ensemble de pompe-réservoir-poignée selon la revendication 4, **caractérisé en ce que** le dispositif réglable (29) est fileté et coopère avec un logement (30) ménagé dans la partie (31) de la poignée (6), ledit dispositif comportant une surface d'extrémité (28) pourvue d'au moins un logement (27A) apte à coopérer avec des parties saillantes (27) associées à un dispositif discoïdal (25) présent sur une partie d'extrémité de la pièce (20) qui entraîne la pompe (2).

6. Ensemble de pompe-réservoir-poignée selon la revendication 1, **caractérisé en ce qu'**une partie formant bracelet (33) est présente pour être fixée au guidon (15).

7. Ensemble de pompe-réservoir-poignée selon la revendication 6, **caractérisé en ce que** la partie formant bracelet (33) comporte un premier demi-collier (34) fixé au corps (3) de pompe et un second demi-collier (35) articulé avec le premier (en 36), une vis de blocage prévue pour ces demi-colliers (34, 35) ayant un plan de positionnement incident dans le plan (X) contenant le guidon et situé dans des côtés de ce dernier.
